Europäisches Patentamt

European Patent Office

Office européen des brevets

(11) Veröffentlichungsnummer: **0 281 939 B1**

(12) **EUROPÄISCHE PATENTSCHRIFT**

(45) Veröffentlichungstag der Patentschrift: **24.06.92**

(21) Anmeldenummer: **88103257.7**

(22) Anmeldetag: **03.03.88**

(51) Int. Cl.⁵: **G01N 31/22**

(54) **Kolorimetrisches Gasmessgerät für Fluor.**

(30) Priorität: **12.03.87 DE 3707944**

(43) Veröffentlichungstag der Anmeldung:
**14.09.88 Patentblatt 88/37**

(45) Bekanntmachung des Hinweises auf die
Patenterteilung:
**24.06.92 Patentblatt 92/26**

(84) Benannte Vertragsstaaten:
**DE FR GB IT**

(56) Entgegenhaltungen:
**DE-A- 2 615 375**
**DE-B- 2 855 648**
**DE-C- 1 000 170**
**GB-A- 2 129 933**

**PRÜFRÖHRCHEN-MESSTECHNIK Juni 1981,
Seiten 5, 24-29, 48, 49, Landsberg, DE; Ecomed GmbH**

(73) Patentinhaber: **Drägerwerk Aktiengesellschaft
Moislinger Allee 53-55
W-2400 Lübeck 1(DE)**

(72) Erfinder: **May, Wolfgang, Dr. Dipl.-Chem.
Buchenweg 6
W-2067 Reinfeld(DE)**

EP 0 281 939 B1

## Beschreibung

Die Erfindung betrifft ein Gasmeßgerät mit einer Vorbehandlungseinrichtung zur Umwandlung des nachzuweisenden Gases in eine über einen kolorimetrischen Indikator anzeigbare Substanz.

Derartige Gasmeßgeräte sind in verschiedenen Ausführungsformen bekannt, so u. a. in Form eines Prüfröhrchens, in welchem eine Vorschicht das nachzuweisende Gas in solche Bestandteile zerlegt, die in der nachgeschalteten Indikatorschicht zu einem Farbumschlag führen. Bei einem bekannten Prüfröhrchen (DE-AS 28 55 648) wird eine solche Vorschicht aus einem mit Ammoniumchlorid imprägnierten Trägermaterial und eine nachgeordnete Anzeigeschicht aus einem mit Säure und Bromphenolblau imprägnierten Trägermaterial verwendet.

Wiederum andere Gasmeßgeräte (DE-OS 26 15 375) besitzen ein kolorimetrisches Indikatorband, welches für eine spezifische Gasart empfindlich ist. Um mit dem selben Indikatorband auch andere gasförmige Schadstoffe messen zu können, wird es über ein Vorbehandlungsrohr begast, in welchem der nachzuweisende Gasbestandteil in anzeigbare Substanzen überführt wird. So enthält das bekannte Gasmeßgerät zum Nachweis von Vinylchlorid ein Vorbehandlungsrohr, in dem das Vinylchlorid oxidiert und Chlor freigesetzt wird, welches von dem chlorempfindlichen Indikatorband angezeigt werden kann.

Weiterhin sind Prüfröhrchen bekannt, welche zum spezifischen Nachweis von Chlor bzw. Brom einsetzbar sind (DE-Buch: Prüfröhrchen-Taschenbuch, Drägerwerk AG Lübeck, Mai 1985, Seite 49), dessen Reagenz aus Ortho-Tolidin besteht. Ein weiteres bekanntes Prüfröhrchen für Flußsäure oder flüchtige Fluoride (DE-PS 10 00 170) besitzt als Reagenz Eisenrhodanid mit einem Zusatz von Salzsäure.

Keines der bekannten Gasmeßgeräte ist in der Lage, freies Fluor nachzuweisen, obwohl für dieses Gas Grenzwerte der Arbeitsplatzkonzentration festgelegt sind.

Der vorliegenden Erfindung liegt somit die Aufgabe zugrunde, ein Gasmeßgerät der genannten Art zu schaffen, mit welchem auf einfache Weise Fluor nachweisbar gemacht wird.

Die Lösung der Aufgabe erfolgt dadurch, daß die Vorbehandlungseinrichtung eine dem Fluor ausgesetzte, ein Metall der ersten oder zweiten Hauptgruppe enthaltende Chlorid-Verbindung besitzt und einen Chlorindikator enthält.

Die Erfindung besitzt den Vorteil, daß nunmehr mit dem Chlorindikator Fluor nachweisbar ist. Das im Metallchlorid gebundene Chlor wird durch das Fluor zu einem Fluorid unter Freigabe des Chlors gebildet, so daß das freie Chlor mit einem Chlorindikator eine Farbreaktion eingehen kann.

Für den Einsatz bei Bandgeräten ist die Vorbehandlungseinrichtung vorteilhafterweise als Vorrohr zu dem Indikator-Band vorgesehen. Dadurch wird Fluor auch über Bandgeräte nachweisbar.

Zur besonderen Ausbildung als ein Fluor-Prüfröhrchen kann die Vorbehandlungseinrichtung als Vorschicht innerhalb eines den Indikator als Nachweisschicht enthaltenden Prüfröhrchens ausgebildet sein.

Es ist zweckmäßig, bei einem Diffusionsprüfröhrchen die Vorbehandlungseinrichtung als eine der Indikatorschicht in Diffusionsrichtung nachgeschaltete Umwandlungsschicht auszubilden, hinter der das Röhrchen abgeschlossen ist. Das Fluor diffundiert über die Indikator- zur Umwandlungsschicht, und das dort freigesetzte Chlor diffundiert dann in Gegenrichtung zur Indikatorschicht, wo es die Anzeige auslöst.

Zum spezifischen Nachweis von Fluor besteht die Chlorid-Verbindung zweckmäßigerweise aus Magnesiumchlorid, welches eine hohe Ausbeute an freigesetztem Chlor liefert, und der Chlorindikator aus o-Tolidin.

Ausführungsbeispiele der Erfindung werden anhand der schematischen Darstellung gezeigt und im folgenden näher erläutert.

Es zeigen:

Fig. 1     ein an eine Pumpvorrichtung angeschlossenes Prüfröhrchen,

Fig. 2     ein Vorröhrchen an einem Bandgerät.

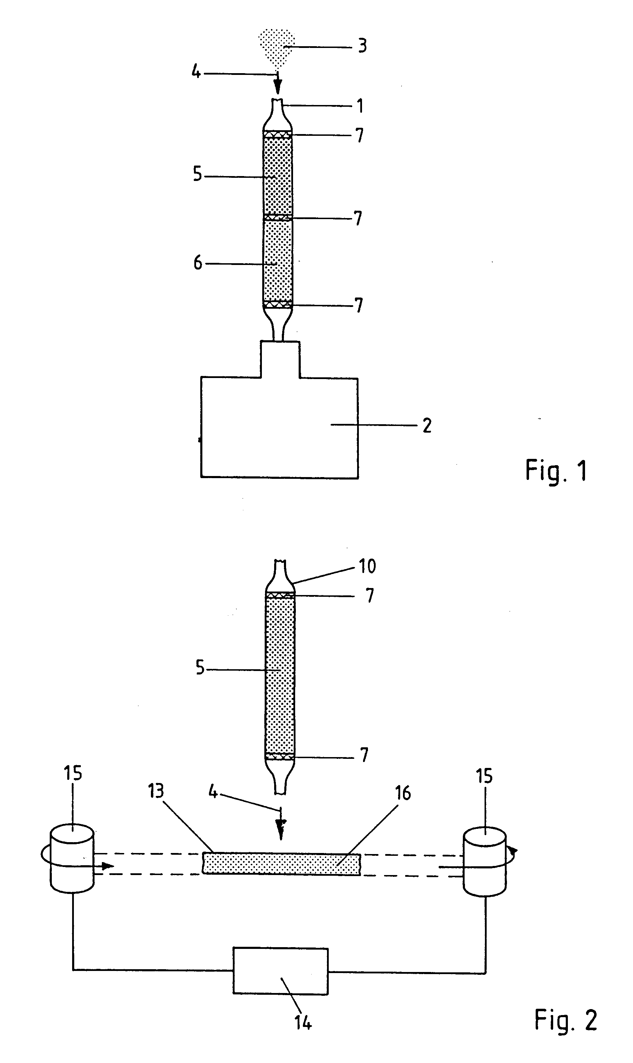

In Figur 1 ist ein beidseitig geöffnetes Prüfröhrchen (1) an eine Pumpvorrichtung (2) angeschlossen. Eine Luftprobe (3), welche nachzuweisendes freies Fluor enthält, wird in Richtung des Strömungspfeils (4) durch eine erste, als Vorschicht ausgebildete Vorbehandlungseinrichtung (5) und anschließend durch eine Indikatorschicht (6) gezogen. Vorschicht (5) und Indikatorschicht (6) sind untereinander und von den geöffneten Spitzen des Prüfröhrchens (1) über poröse Halteelemente (7) eingefaßt.

Zum Nachweis von Fluor in der Luftprobe (3) besteht die Vorschicht (5) aus einer mit Magnesiumchlorid imprägnierten körnigen Füllung und der Indikator (6) aus einem mit o-Tolidin getränkten körnigen Silicagelträger.

In Figur 2 ist in einem Vorröhrchen (10) als Vorbehandlungseinrichtung eine körnige Vorschicht (5) zwischen zwei Halteelementen (7) eingeschlossen. Eine nicht dargestellte Fördervorrichtung fördert die Luftprobe mit dem nachzuweisenden Fluor durch das Vorröhrchen (10), wobei das das Vorröhrchen (10) verlassende sekundäre Halogen Chlor in Richtung des Strömungspfeils (4) auf das Indikator-Band (13) eines schematisch dargestellten kolorimetrischen Bandnachweisgerätes (14)gefördert wird. Das um die Rollen (15) wickelbare Band (13) ist mit einer Indikatorschicht (16) aus o-Tolidin versehen.

## Patentansprüche

1. Gasmeßgerät mit einer Vorbehandlungseinrichtung zur Umwandlung des nachzuweisenden Gases in eine über einen kolorimetrischen Indikator anzeigbare Substanz, dadurch gekennzeichnet, daß zum Nachweis von Fluor die Vorbehandlungseinrichtung (5) eine dem Fluor ausgesetzte, ein Metall der ersten oder zweiten Hauptgruppe enthaltende Chlorid-Verbindung besitzt und einen Chlorindikator enthält.

2. Gasmeßgerät nach Anspruch 1, dadurch gekennzeichnet, daß die Vorbehandlungseinrichtung als ein die Metallchlorid-Verbindung enthaltendes Vorrohr (10) zu einem Indikator-Band (13) ausgebildet ist.

3. Gasmeßgerät nach Anspruch 1, dadurch gekennzeichnet, daß die Vorbehandlungseinrichtung als eine Vorschicht (5) eines den Indikator (6) enthaltenden Prüfröhrchens (1) ausgebildet ist.

4. Gasmeßgerät nach Anspruch 1, dadurch gekennzeichnet, daß die Vorbehandlungseinrichtung als eine der Indikatorschicht in Diffusionsrichtung nachgeschaltete Umwandlungsschicht für ein Diffusionsprüfröhrchen ausgebildet ist.

5. Gasmeßgerät nach einem der Ansprüche 1 bis 4, dadurch gekennzeichnet, daß die Chlorid-Verbindung Magnesiumchlorid und der Chlorindikator o-Tolidin ist.

## Claims

1. Gas-measuring instrument having a preliminary treatment device for converting the gas to be detected into a substance which can be indicated by way of a colorimetric indicator, characterised in that for the purpose of detecting fluorine the preliminary treatment device (5) has a chloride compound, exposed to the fluorine and containing a metal of the first or second main group, and contains a chlorine indicator.

2. Gas-measuring instrument according to claim 1, characterised in that the preliminary treatment device is formed as a tube (10), which contains the metal chloride compound, preliminary to an indicator band (13).

3. Gas-measuring instrument according to claim 1, characterised in that the preliminary treatment device is formed as a preliminary layer (5) of a test tube (1) containing the indicator (6).

4. Gas-measuring instrument according to claim 1, characterised in that the preliminary treatment device is formed as a conversion layer which is subsequently connected to the indicator layer in the direction of diffusion for a diffusion test tube.

5. Gas-measuring instrument according to one of the claims 1 to 4, characterised in that the chloride compound is magnesium chloride and the chlorine indicator is o-tolidine.

## Revendications

1. Appareil de mesure de gaz comportant un dispositif de pré-traitement pour transformer le gaz à déceler en une substance pouvant être indiquée par un indicateur colorimétrique, caractérisé en ce que pour déceler du fluor, le dispositif de pré-traitement (55) possède un composé de chlorure exposé au fluor, contenant un métal du premier ou du deuxième groupe principal et contient un indicateur de chlore.

2. Appareil de mesure de gaz selon la revendication 1, caractérisé en ce que le dispositif de prétraitement est un tube préliminaire (10) contenant le composé de chlorure de métal, venant avant une bande d'indicateur (13).

3. Appareil de mesure de gaz selon la revendication 1, caractérisé en ce que le dispositif de prétraitement est une couche préliminaire (5) d'un tube à essais (1) contenant l'indicateur (6).

4. Appareil de mesure de gaz selon la revendication 1, caractérisé en ce que le dispositif de prétraitement est une couche de transformation, venant après la couche d'indicateur, dans le sens de la diffusion, pour un tube à essais de diffusion.

5. Appareil de mesure de gaz selon l'une des revendications 1 à 4, caractérisé en ce que le composé de chlorure est du chlorure de magnésium et l'indicateur de chlore, est de la o-tolidine.

Fig. 1

Fig. 2